# EUROPEAN PATENT APPLICATION

(11) **EP 4 554 098 A1**
(43) Date of publication of application: **14.05.2025**
(21) Application number: 24275112.1
(22) Date of filing: 28.10.2024
(51) Int. Cl.: H04B 1/04

(54) **A LINEARISATION SYSTEM AND/OR A METHOD OF USE THEREOF**

(30) Priority: 08.11.2023 GB 202317142
(71) Applicant: Radio Design Limited, West Yorkshire BD17 7DW (GB)
(72) Inventor: Shaw, Stephen Jonathan, Shipley, BD17 7DW (GB)
(74) Representative: Tomkinson, Alexandra

(57) **Abstract**

A linearisation system is provided for use with radio frequency transmitter or transceiver apparatus. The system includes radio frequency input means for allowing one or more radio frequency signals to be input into the system in use and radio frequency output means for allowing one or more radio frequency signals to be output from the system in use. Digital Pre-Distortion (DPD) means are provided for linearising the one or more radio frequency signals passing through the linearisation system between the radio frequency input means and the radio frequency output means in use. At least one solid state tunable filter means is provided to filter the one or more radio frequency signals and optionally allow adjustment of the resonating radio frequency of the solid state tunable filter means if required in use. The solid state tunable filter means is provided in and/or associated with a DPD means, thereby providing improved linearity to the solid state tunable filter means in use.

## Description

The present invention relates to a linearisation system and/or a method of use thereof. The present invention also relates to solid state tunable filter apparatus provided with a linearisation system and/or to a method of use thereof. A yet further aspect of the present invention is radio frequency transmitter or transceiver apparatus including a linearisation system and/or a method of use thereof.

Filter apparatus is typically used in telecommunication systems to compensate for disturbances, such as interference, that may affect one or more RF signals being sent and/or received by the telecommunication systems. The filter apparatus is designed to remove or attenuate unwanted RF components from the transmit and/or receive RF signals that fall outside a desired RF operating band in order to enhance the desired transmit and/or receive RF signals.

Wireless telecommunication systems typically include RF transmitter and/or receiver apparatus for transmitting and/or receiving RF signals in the medium to high frequency ranges (i.e. in the megahertz and gigahertz frequency ranges). The RF transmitter and/or receiver apparatus includes filter apparatus in order to filter the transmit and/or receive signals. An example of conventional RF filter apparatus typically includes a conductive housing defining one or more resonant cavities therein with one or more resonators located in each cavity. A resonator is an electronic component that exhibits resonance for a narrow range of frequencies. Two or more resonators within the filter are typically electromagnetically coupled together to provide the filter with a required set of performance characteristics.

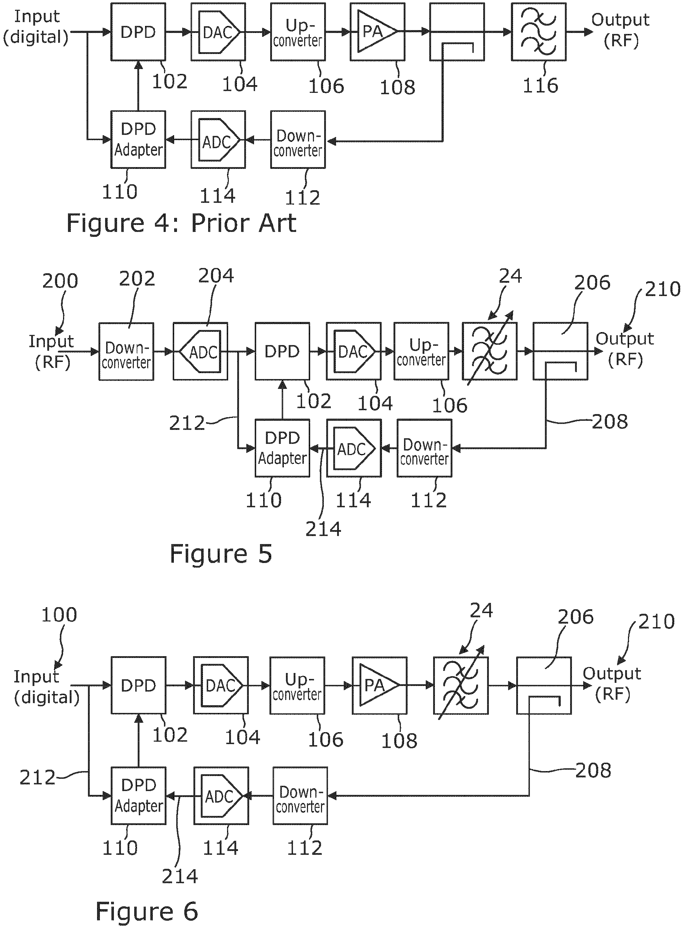

Figure 4 is an example of how conventional filter apparatus is normally incorporated into a modern high power radio transmitter. A digital signal 100 is input into the transmitter and this signal passes through digital predistortion (DPD) means 102 to linearise the transmitter, or more particularly to linearise a power amplifier (PA) used within the transmitter. The digital signal then passes through a digital-to-analog converter (DAC) 104, an up-converter 106 and a power amplifier (PA) 108. The PA 108 has poor linearity and is not suitable for the transmitter application without a linearisation system being incorporated into the transmitter architecture. As such, a DPD feedback path is provided that aims to characterize the signal distortion at the PA 108 by observing the PA output signal and, knowing the output signal that is desired, altering the input signal to the PA so that the PA output signal is closer to the desired output signal. The DPD feedback path contains both hardware and software elements.

More particularly, the DPD means includes a main signal path and a DPD feedback path. The main signal path includes a DPD actuator 102, which is where the predistortion of the signal is performed in real time, such that the output to the PA 108 becomes more linear; and a DPD adapter or DPD adaptation engine 110, which is where DPD coefficients are updated based on sampling of the PA output signal. The array of coefficients are continually modified by the DPD adaptation engine 110 in use, so as to optimise the performance of the DPD actuator 102. Changes to the coefficients are made to track changes such as for example, temperature, signal power modulation schemes and/or the like.

A sample of the signal output from the PA 108 is fed to the DPD adaptation engine 110 via a down-converter 112 and an analog-to-digital converter (ADC) 114 . The DPD adaptation engine 110 then compares the digital input signal to the PA with the digitised down-converted sample of the signal from the PA 108, and modifies the DPD coefficients. The DPD coefficients are fed into the DPD actuator so as to improve linearity within the radio transmitter RF frequency operating band. The main RF signal output from the PA 108 passes through a non-tunable RF filter 116 to remove spurious RF components outside of the required radio transmitter RF frequency operating band. Fixed (non-tunable) filters are available with very high linearity so it is not necessary to include the filter 116 within the DPD loop.

In some applications, it is desirable for the filter apparatus to be reconfigurable in operation. Reconfigurable filter apparatus that are currently available include switched RF filter banks, non-solid state tunable RF filters and solid state tunable RF filters.

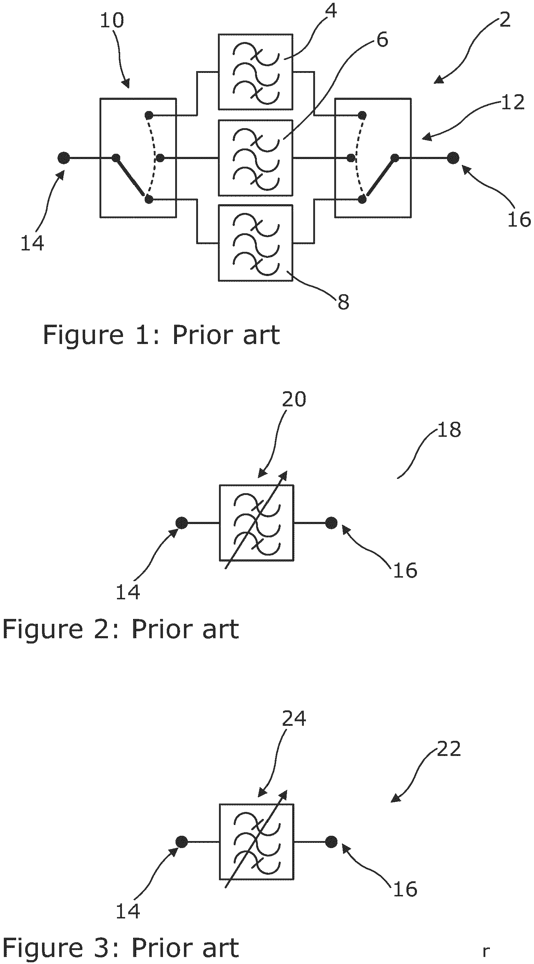

Conventional switched RF filter banks, which can be provided in solid state or non-solid state form, can be arranged to have sufficient linearity and power handling capability to be used in high powered RF applications. An example of a known switched filter bank 2 is shown in figure 1. The filter bank 2 typically contains 'n' filters 4, 6, 8, each tuned to a different radio frequency. The filters 4, 6, 8 are connected at either end to a pair of n:1 switches 10, 12, which are used to connected one of the 'n' filters 4, 6, 8 to two RF terminals 14, 16, leaving the other 'n' filters 4, 6, 8 disconnected. Problems with this arrangement are that only one of the 'n' filters is used at any one time, with the other 'n' filters being redundant, thereby making the filter apparatus large, heavy and costly. This reduces the suitability of the apparatus for many applications, such as for example, personnel-mounted radio equipment.

Conventional non-solid state tunable RF filters can also be arranged to have sufficient linearity and power handling capability to be used in high powered radio applications. An example of a known non-solid state tunable RF filter apparatus 18 is shown in figure 2. The tunable filter 20 of the apparatus 18 is connected between two RF terminals 14, 16. The resonant frequency of the resonating elements of the filter 20 is altered by mechanical means, such as for example an electric motor or stepper motor. Although these filters tend to be smaller and lighter than switched filter banks, they are expensive due to the requirement of using specialised electric motors and high precision mechanical actuators. They are also slow to reconfigure, thereby making them unsuitable for applications where fast frequency hopping may be required. In addition, they tend to have poor reliability and robustness due to the use of fragile moving parts compared to solid state tunable filters, thereby limiting their suitability for certain application, such as for example defence and aerospace applications.

Conventional solid state tunable RF filters do not have sufficient power handling capability and linearity for use in high powered radio applications. An example of a known solid state tuneable filter apparatus 22 is shown in figure 3. The tuneable filter 24 of the filter apparatus 22 is connected between two RF terminals 14, 16. The resonant frequency of the resonating elements of the filter 24 is altered by solid state electronic means. The components providing the solid state tuning function with the capability of operating at high RF power levels tend to have poor linearity, resulting in filters that are unsuitable for high powered radio applications.

It is an aim of the present invention to provide a linearisation system and/or a method of use thereof.

It is therefore an aim of the present invention to provide solid state tunable filter apparatus including a linearisation system and/or a method of use thereof that overcomes the abovementioned problems.

It is an aim of the present invention to provide apparatus including solid state tunable filter means, and a linearisation system that is arranged so as to be applied to the solid state tunable filter means in use.

It is a further aim of the present invention to provide radio frequency transmitter and/or transceiver apparatus including a linearisation system and/or a method of use thereof that overcomes the abovementioned problems.

It is a yet further aim of the present invention to provide a telecommunications system including a linearisation system and/or a method of use thereof that overcomes the abovementioned problems.

It will be appreciated that reference to a method of use herein also can relate to a method of manufacture.

According to a first aspect of the present invention there is provided a linearisation system, said linearisation system including:
- radio frequency input means for allowing one or more radio frequency signals to be input into the system in use;
   radio frequency output means for allowing one or more radio frequency signals to be output from the system in use;
   Digital Pre-Distortion (DPD) means for linearising the system between the radio frequency input means and the radio frequency output means in use;
   characterised in that the linearisation system further includes:
      at least one solid state tunable filter means provided between the radio frequency input means and the radio frequency output means and which is arranged to filter the one or more radio frequency signals passing through the system in use;
      and wherein the DPD means are applied to the solid state tunable filter means, thereby providing improved linearity to the solid state tunable filter means in use.

Thus, the use of a digital pre-distortion means (also known as digital pre-distortion (DPD)) to linearise solid state tunable filter means has the advantage of making the radio frequency (RF) transmitter and/or transceiver apparatus in which the filter means can be provided in use, relatively small, lightweight and inexpensive to produce compared to apparatus including other known reconfigurable filter means. The resulting solid state tunable filter means provided with DPD has high levels of RF power handling capability and linearity, thereby making it suitable for use in high power radio applications. In addition, reconfiguration of the filter means to allow adjustment of the resonating radio frequency of the same can take place in a reduced amount of time and the filter means has improved reliability and robustness.

It is surprising and unexpected that a solid state tunable filter means would benefit from having DPD applied to the same. This is because normally a tunable filter has a RF passband and RF stop bands at either end of the RF passband. It would generally be expected that non-linear components falling outside of the RF passband would be filtered by the filter means before they could be sampled by DPD means and therefore a skilled person would expect the DPD means to have little or no positive effect on the linearity of the filter means. However, the Applicants have unexpectedly found that non-linear elements fall within the RF passband of the solid state filter means, such that the DPD means can sample the signal and apply DPD to the signal to improve linearity of the filter means in use.

It is also surprising that the provision of delay equalising means can further improve the linearity of the solid state filter means in use.

It is yet further surprising that delay equalising means and DPD means can be combined in a linearisation system to provide improved linearity to solid state tunable filter means in use.

In one embodiment the DPD means includes at least DPD actuator means (which can also be referred to as a DPD actuator), and DPD adapter means (which can also be referred to as a DPD adapter or a DPD adaptation engine).

Preferably the DPD means includes a main signal path and a DPD feedback path.

Preferably the DPD actuator means is provided in the main signal path and the DPD adapter means is provided in the DPD feedback path.

In one embodiment the DPD feedback path includes or consists of an inverse mathematical model of the non-linearities in elements within the main signal path between the DPD actuator means and a) a signal output from the solid state tunable filter means; or b) coupler means or device electrically connected to or downstream of the solid state tunable filter means.

Preferably the DPD means, or the main signal path of the DPD means, includes or consists of any or any combination of the DPD actuator means, digital-to-analogue-converter (DAC) means (which can also be referred to as a digital-to-analogue converter) and up-converter means (which can also be referred to as an up converter) or direct conversion DAC means (which can also be referred to as a direct conversion DAC), and the solid state tunable filter means.

In one embodiment the DPD means, or the DPD feedback path of the DPD means, includes or consists of any or any combination of down-converter means (which can also be referred to as a down converter), analogue-to-digital converter (ADC) means (which can also be referred to as analogue-to-digital converter), direct conversion ADC means and the DPD adapter means.

Preferably the DPD actuator means is any means, software, hardware and/or device arranged to improve linearisation of a digital RF signal. For example, the DPD actuator means could include a Field Programmable Gate Array (FPGA), an Application-Specific Integrated Circuit (ASIC), a mathematical model, an inverse mathematical model and/or the like.

Preferably the DAC means is any means and/or device arranged to convert a digital signal into an analog signal or Intermediate Frequency (IF) signal in use.

Preferably the up-converter means is any means and/or device arranged to convert an input IF or baseband signal to an output higher RF signal.

Preferably the down-converter means is any means and/or device arranged to convert an input RF signal to a lower IF or baseband signal.

Preferably the ADC means is any means and/or device arranged to convert an analog signal or IF signal into a digital signal in use.

In one embodiment a direct conversion ADC means or direct conversion DAC means can be provided which directly converts analog to digital signals or digital to analog signals directly without the need for up converters and/or down converters.

Preferably the DPD adapter means is any means, software, hardware and/or device arranged to modify one or more coefficients fed into the DPD actuator means in use.

In one example, the DPD adapter means is an algorithm that is partly implemented in digital hardware (i.e. FPGA or ASIC) and partly in software running on a suitable processor (i.e. micro-processor, microcontroller, digital signal processor, FGPA or ASIC soft- or hardcore processor). The basic function of the same is preferably to invert a large matrix of complex numbers to arrive at a revised set of coefficients which are fed into the DPD actuator means in use.

Preferably the one or more coefficients being applied by the DPD actuator means and/or modified by the DPD adapter means are able to track changes such as for example, in temperature, signal power, RF modulation scheme and/or the like.

Preferably the DPD actuator means; and the DAC means and the up-converter means, or the direct conversion DAC means; are electrically connected in series upstream of the solid state tunable filter means in the main signal path.

Further preferably the DAC means or direct conversion DAC means is electrically connected to the DPD actuator means downstream of the same in the main signal path. In one example, the up-converter means is electrically connected to the DAC means downstream of the same.

Preferably the solid state tunable filter means is electrically connected, directly or indirectly, to the up-converter means, or direct conversion DAC means, downstream of the same.

In one embodiment the linearisation system or DPD means includes power amplifier (PA) means, and preferably the DPD means is arranged to also linearise or help improve the linearity of the PA means in use. Thus, in this embodiment, the linearisation system or the DPD means is arranged to linearise both the solid state tunable filter means and the PA means in use.

Preferably the PA means is provided in the main signal path of the DPD means.

Preferably the PA means is any means and/or device arranged to amplify RF signals to a required power level for transmitting and/or receiving in use.

In one embodiment the PA means is electrically connected between the up-converter means or direct conversion DAC means and the solid state tunable filter means within the DPD means. Further preferably the PA means is electrically connected in series between the up-converter means or direct conversion DAC means and the solid state tunable filter means in the main signal path of the DPD means.

Preferably the down-converter means and the ADC means, or the direct conversion ADC means, and the DPD adapter means are electrically coupled in series in the DPD feedback path, from the output of the solid state tunable filter means or from an output downstream of the solid state tunable filter means, to the DPD actuator means.

In one embodiment the solid state tunable filter means is electrically connected to coupler means, which in turn is electrically connected to the down-converter means or the direct conversion ADC means (i.e. the coupler means can be electrically to or provided downstream of the solid state tunable filter means).

Preferably the DPD adapter means is arranged to compare a signal input into the DPD actuator means with a digitised down-converted sample of the RF signal output from the PA means and/or solid state tunable filter means, and is able to modify one or more coefficients so as to improve the linearity of the PA and/or solid state tunable filter means within the desired RF operating band of the filter means and/or apparatus.

Preferably the solid state tunable filter means is any means or device arranged to filter, attenuate and/or remove one or more RF signals outside of the selected RF operating band of the filter means in use. Further preferably the resonant frequency of the resonating means of the filter means is adjustable by solid state electronic means or components; or further preferably semiconductor electronics.

In one embodiment the linearisation system is provided in radio frequency transmitter or transceiver apparatus.

Preferably the radio frequency transmitter and/or transceiver apparatus is for use in a defence and/or aerospace application.

In one embodiment delay equalising means are provided in the linearisation system and/or forms part of the DPD means to equalise or improve equalisation of a delay of the solid state tunable filter means in use.

Preferably the delay equalising means includes a main delay equalising signal path or can be included the main path of the DPD means, and a delay equalising feedback path or can be included in the DPD feedback path.

Preferably the delay equalising means includes delay equalising actuator means or adaptive delay equalising actuator means (which can also be referred to as a delay equalising actuator or group delay equaliser), and delay equaliser adapter means (which can also be referred to as a delay equaliser adapter or Group delay equaliser adaptation engine).

Preferably the delay equalising actuator means or adaptive delay equalising actuator means are provided in the main signal path of the delay equalising means or the DPD main signal path.

Preferably the delay equaliser adapter means are provided in the delay equalising feedback path or the DPD feedback path.

Preferably the delay equalising actuator means or adaptive delay equalising actuator means is any means, hardware, software and/or device that allows adjustment of the relative phases of different RF frequencies to achieve a constant or substantially constant group delay in use.

Preferably the delay equalising adapter means is any means, software, hardware and/or device arranged to modify one or more coefficients fed into the delay equalising actuator means in use.

In one embodiment down-converter means and ADC means, or direct conversion ADC means, are electrically connected to the delay equalising actuator means upstream of the same in use in the main signal path, and further preferably are electrically connected in series.

Preferably up-converter means or down-converter means, and ADC means, or direct conversion ADC means, are electrically connected to the delay equalising adapter means in the delay equalising feedback path in use, and further preferably are electrically connected in series.

In one embodiment the delay equalising actuator means and the DPD actuator means can be combined into a single means, device and/or function in use. Preferably this combined single means, device and/or function is provided in the main signal path.

In one embodiment the delay equalising adapter means and the DPD adapter means can be combined into a single means, device and/or function in use. Preferably the combined single means, device and/or function is provided in the feedback path of the DPD and delay equalising loop(s).

Preferably the RF input means includes any means or device, such as for example an electrical and/or mechanical connector, that allows RF signals to be input through the same in use.

Preferably the RF output means includes any means or device, such as for example an electrical and/or mechanical connector, that allows RF signals to be output through the same in use.

According to a second aspect of the present invention there is provided a method of using a linearisation system, said method including the steps of
- inputting one or more radio frequency signals into the system via radio frequency input means;
- outputting one or more radio frequency signals from the system via radio frequency output means;
- applying Digital Pre-Distortion (DPD) means between the radio frequency input means and the radio frequency output means to linearise the system;
characterised in that said method further includes
- filtering the one or more radio frequency signals in the system using at least one solid state tunable filter means provided between the radio frequency input means and the radio frequency output means, and applying the DPD means to the at least one solid state tunable filter means to provide improved linearity to the at least one solid state tunable filter means.

According to one aspect of the present invention there is provided apparatus including a linearisation system and solid state tunable filter means, said apparatus including:
- radio frequency input means for allowing one or more radio frequency signals to be input into the apparatus in use;
- radio frequency output means for allowing one or more radio frequency signals to be output from the apparatus in use;
- the at least one solid state tunable filter means provided between the radio frequency input means and the radio frequency output means and arranged to filter the one or more radio frequency signals passing through the apparatus in use;
   the linearisation system including digital Pre-Distortion (DPD) means for providing improved linearity within the apparatus between the radio frequency input means and the radio frequency output means in use; characterised in that
   the DPD means and the solid state tunable filter means are arranged so that the DPD means are applied to the solid state tunable filter means, thereby providing improved linearity to the solid state tunable filter means in use.

According to a further aspect of the present invention there is provided a method of using apparatus including a linearisation system and solid state tunable filter means, said method including the steps of:
- inputting one or more radio frequency signals into the apparatus via radio frequency input means;
- outputting one or more radio frequency signals from the apparatus via radio frequency output means;
- filtering the one or more radio frequency signals in the apparatus using at least one solid state tunable filter means provided between the radio frequency input means and the radio frequency output means,
- applying Digital Pre-Distortion (DPD) means between the radio frequency input means and the radio frequency output means to provide a linearisation system in the apparatus;
characterised in that said method further includes
applying the DPD means to the at least one solid state tunable filter means to provide improved linearity to the at least one solid state tunable filter means.

Preferably the apparatus is radio frequency (RF) transmitter or transceiver apparatus.

According to one aspect of the present invention there is provided radio frequency (RF) transmitter or transceiver apparatus, said apparatus including:
- radio frequency input means for allowing one or more radio frequency signals to be input into the apparatus in use;
   radio frequency output means for allowing one or more radio frequency signals to be output from the apparatus in use;
- Digital Pre-Distortion (DPD) means to provide a linearisation system for providing improved linearity between the radio frequency input means and the radio frequency output means in use;
- the apparatus including at least one solid state tunable filter means provided between the radio frequency input means and the radio frequency output means and which is arranged to filter the one or more radio frequency signals passing through the apparatus in use; characterized in that the DPD means and the solid statue tunable filter means are arranged so that the DPD means is applied to the solid state tunable filter means, thereby providing improved linearity to the solid state tunable filter means in use.

According to a further aspect of the present invention there is provided a method of using radio frequency transmitter or transceiver apparatus including a linearisation system, said method including the steps of:
- inputting one or more radio frequency signals into the apparatus via radio frequency input means;
- outputting one or more radio frequency signals from the apparatus via radio frequency output means

applying Digital Pre-Distortion (DPD) means between the radio frequency input means and the radio frequency output means to linearise the apparatus;
filtering the one or more radio frequency signals in the apparatus using at least one solid state tunable filter means provided between the radio frequency input means and the radio frequency output means, characterised in that the method further includes: applying the DPD means to the at least one solid state tunable filter means to provide improved linearity to the at least one solid state tunable filter means.

According to an aspect of the present invention there is provided solid state tunable filter apparatus forming part of a linearisation system and/or apparatus.

According to an aspect of the present invention there is provided a method of using solid state tunable filter apparatus forming part of a linearisation system and/or apparatus.

According to a further aspect of the present invention there is provided a telecommunication system including a linearisation system.

According to a yet further aspect of the present invention there is provided a method of using a telecommunication system including a linearisation system.

Embodiments of the present invention will now be described with reference to the following figures, wherein:
Figure 1 (Prior Art) shows an example of a known switched filter bank arrangement;
Figure 2 (Prior Art) shows an example of a known non-solid state tunable filter arrangement;
Figure 3 (Prior Art) shows an example of a known solid state tunable filter arrangement;
Figure 4 (Prior Art) shows an example of a typical high power radio transmitter architecture;
Figure 5 is a schematic drawing showing a linearisation system including a solid state tunable filter forming part of DPD means according to an embodiment of the present invention;
Figure 6 is a schematic drawing showing a linearisation system used in a radio frequency transmitter including a solid state tunable filter and power amplifier forming part of DPD means according to an embodiment of the present invention;
Figure 7 is a schematic drawing showing a linearisation system including a solid state tunable filter forming part of DPD means and including adaptive group delay equalisation according to an embodiment of the present invention;
Figure 8 is a schematic drawing showing a linearisation system used in a radio frequency transmitter including a solid state tunable filter forming part of DPD means and including adaptive group delay equalisation according to a further embodiment of the present invention.

Referring to figure 5, there is illustrated a linearisation system according to an embodiment of the present invention. The linearisation system includes a solid state tunable filter 24 forming part of DPD means (i.e. having a DPD feedback path) in accordance with an embodiment of the present invention. The solid state tunable filter 24 is typically used in RF transmitter and/or transceiver apparatus in use to attenuate and/or remove unwanted RF signals outside of the selected operating band of the filter. The filter 24 is tunable in that it allows reconfiguration of the filter between one of two or more possible operating RF bands in use via solid state electronic means or using semi-conductor electronics.

A radio frequency (RF) signal 200 is input into the apparatus via RF input means. The signal 200 passes through a down-converter 202 and an analogue-to-digital converter (ADC) 204, or alternatively a direct conversion ADC (not shown), before entering the DPD means. More particularly, the DPD means includes a DPD actuator 102, a DAC 104 and an up-converter 106 (or a direct conversion DAC could be used) electrically connected in series upstream of the solid state tunable filter 24 and forming part of a main signal path. The filter 24 is electrically connected with a coupler 206. The DPD means also includes a DPD feedback path comprising a down-converter 112 that is electrically connected to the coupler 206, ADC 114 (or a direct conversion ADC could be used) and a DPD adaptation engine 110. A sample 208 of the RF signal output from the solid state tunable filter passes along the DPD feedback path to the DPD adaptation engine for comparison purposes as described below. The main RF signal 210 is output from the system viaRF output means.

The DPD actuator 102 is used to linearise the solid state tunable filter 24 in use. The DPD adaptation engine 110 compares the digital RF signal 212 input into the DPD feedback path with the digitised down-converted RF signal 214 output from the solid state tunable filter 24, and modifies one or more coefficients so as to optimise the performance of the DPD actuator 102 and thereby improve the linearity of the filter 24 within the selected RF operating band. The one or more coefficients modified by the DPD adaptation engine 110 track changes such as temperature, signal power, RF modulation scheme and/or the like. The DPD adaptation engine continuously or substantially continuously modifies the DPD actuator so as to optimise the performance of the same in use.

Referring to figure 6, there is illustrated a further embodiment of the present invention. In this embodiment the linearisation system is provided in a radio frequency transmitter and the DPD feedback path is used to help linearise both a power amplifier (PA) 108 electrically connected upstream and in series with the solid state tunable filter 24. Thus, both the PA and the solid state tunable filter 24 are provided in the DPD means and undergo linearisation in an efficient and cost effective manner using a single DPD actuator 102.

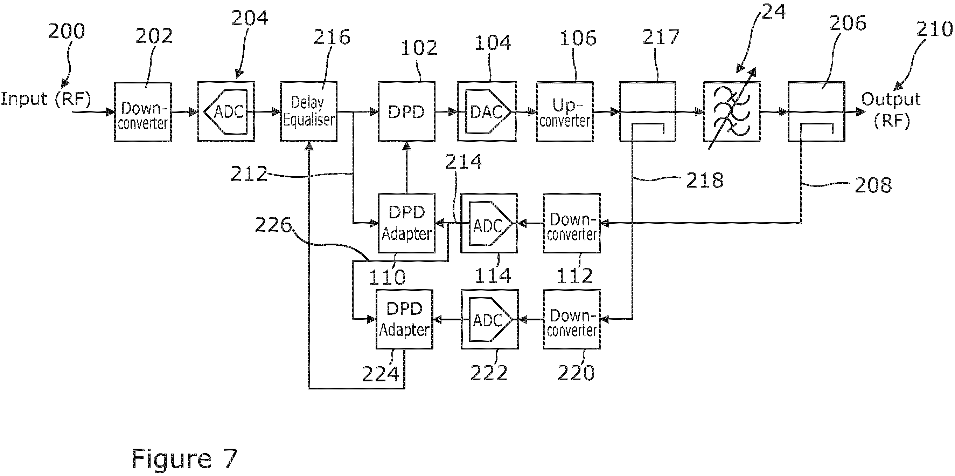

It is to be noted that DPD feedback paths have conventionally been used and developed to linearise PAs. For example, a PA output coupler, a downconverter and ADC are typically referred to as a DPD observation receiver. One potential limitation of applying this technology to linearise solid state tunable filters is that the filters can, in some cases, display large group delay variation across the operating RF passband, particularly close to the edge frequencies of the RF passband. This group delay variation could potentially limit the linearity improvement found in the solid state tunable filter to modest values. In an attempt to overcome this problem, a delay equalisation feedback path could be used, if required, with the DPD feedback path, as shown in figure 7.

In this embodiment delay equalisation means is provided. The delay equalisation means typically includes a delay equalisation main signal path which can, in some examples, be the DPD main signal path, and a delay equalisation feedback path. The main signal path can include a group delay equaliser actuator 216 electrically connected between the ADC 204 and the DPD actuator 102. Coupler 217 is electrically connected between the up-converter 106 and the solid state tunable filter 24 in the main signal path. The delay equalisation feedback path comprising an up-converter 220 that is electrically connected to coupler 217, ADC 222 and a group delay equaliser adaptation engine 224. A sample of the up-converted RF signal 218 is passed to the group delay equaliser adaptation engine 224 for comparison with the RF signal 208 passing through the DPD adapter, as shown by arrow 226, and equalises the delay caused by the filter 24. The group delay equaliser adaptation engine modifies the adaptive group delay equalisation actuator 216 to optimise the performance of the same in use.

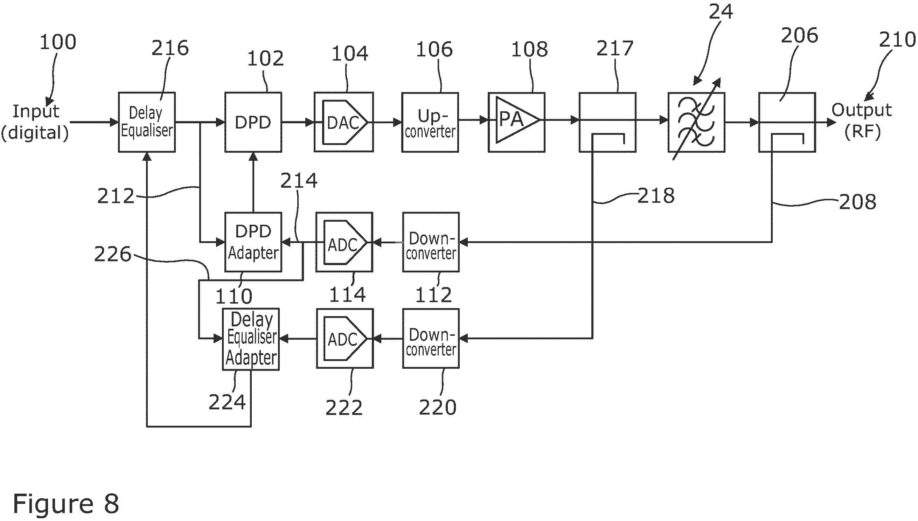

Referring to figure 8, there is illustrated a further embodiment of the present invention. In this embodiment the linearisation system is provided in a high power radio transmitter and includes the DPD means and the delay equalisation means to help linearise both power amplifier (PA) 108 provided upstream of and electrically coupled in series with the coupler 217 and the solid state tunable filter 24, and to equalise the group delay of the filter 24. Thus, both the PA 108 and the solid state tunable filter 24 are provided in the main path of the DPD means and undergo linearisation in an efficient and cost effective manner using a single DPD actuator 102 and the delay of the filter 24 is equalised using single group delay equaliser actuator 216.

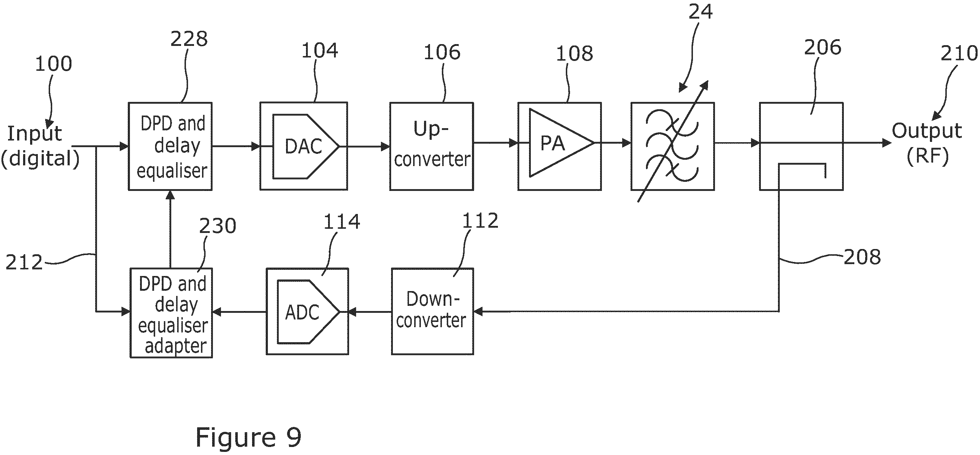

In one embodiment the positions of the DPD actuation engine 102 and the group delay equaliser actuation engine 216 could be reversed, as could the positions of the DPD adaptation engine110 and the group delay equaliser adaptation engine 224. Alternatively, the DPD actuator and the group delay equaliser actuator could be formed as a single means/unit/function 228 and the DPD adaptation engine and the group delay equaliser adaptation engine could be provided as a single unit/function 230, as shown in figure 9. Alternatively still, the DPD actuator and the group delay equaliser actuator could be formed as a single unit/function and/or the DPD adaptation engine and the group delay equaliser adpatation engine could be provided as a single unit/function.

## Claims

1. A linearisation system, said linearisation system including:
- radio frequency input means for allowing one or more radio frequency signals to be input into the system in use;
- radio frequency output means for allowing one or more radio frequency signals to be output from the system in use;
- Digital Pre-Distortion (DPD) means for linearising the system between the radio frequency input means and the radio frequency output means in use;
**characterised in that** the linearisation system further includes:-at least one solid state tunable filter means provided between the radio frequency input means and the radio frequency output means and which is arranged to filter the one or more radio frequency signals passing through the system in use; and wherein the DPD means is applied to the the solid state tunable filter means , thereby providing improved linearity to the solid state tunable filter means in use.

2. The linearisation system according to claim 1, wherein the DPD means includes a main signal path and a DPD feedback path, and wherein the DPD feedback path includes or consists of an inverse mathematical model of non-linearities in elements within the main signal path between a DPD actuator means provided in the main signal path and a) a signal output from the solid state tunable filter means means, or b) a coupler means electrically connected to or downstream of the solid state tunable filter means.

3. The linearisation system according to claim 2 wherein the main signal path of the DPD means includes or consists of the DPD actuator means, digital-to-analogue converter (DAC) means and up-converter means or direct conversion DAC means and the solid state tunable filter means.

4. The linearisation system according to claim 2 wherein the DPD feedback path includes or consist of down-converter means and analogue-to-digital converter (ADC) means or direct conversion ADC means, and DPD adapter means.

5. The linearisation system according to claim 3, wherein the DPD actuator means, the DAC means and the up-converter means or the direct conversion DAC means, are electrically connected in series upstream of the solid state tunable filter means in the main signal path.

6. The linearisation system according to claim 3, wherein Power Amplifier (PA) means are provided in the main signal path to improve the linearity of the PA means in addition to the solid state tunable filter means.

7. The linearisation system according to claim 6, wherein the PA means is electrically connected in series between an up-converter means or direct conversion DAC means and the solid state tunable filter means within the main signal path.

8. The linearisation system according to claim 4, wherein the down converter means and the ADC means or the direct conversion ADC means, and the DPD adapter means are electrically coupled in series in the DPD feedback path from the output of the solid state tunable filter means or from an output of coupling means electrically coupled to or provided downstream of the solid state tunable filter means, to the DPD actuator means.

9. The linearisation system according to claim 1, wherein delay equalising means are provided in the system and/or form part of the DPD means to equalise or improve equalisation of a delay of the solid state tunable filter means in use.

10. The linearisation system according to claim 9, wherein the delay equalising means includes delay equalising actuator means or adaptive equalising actuator means provided in a delay equalising main signal path or in the DPD main signal path, and delay equalising adapter means provided in a delay equalising feedback path or in the DPD feedback path.

11. The linearisation system according to claim 10, wherein the delay equalising actuator means and the DPD actuator means can be combined into a single device, and/or the delay equalising adapter means and the DPD adapter means can be combined into a single device.

12. The linearisation system according to claim 1, wherein downconverter means and ADC means or a direct ADC means are provided downstream of the radio frequency input means and upstream of the DPD means.

13. A method of using a linearisation system, said method including the steps of:
- inputting one or more radio frequency signals into the system via radio frequency input means;
- outputting one or more radio frequency signals from the system via radio frequency output means;
- applying Digital Pre-Distortion (DPD) means between the radio frequency input means and the radio frequency output means to linearise the system; **characterised in that** said method further includes
- filtering the one or more radio frequency signals in the system using at least one solid state tunable filter means provided between the radio frequency input means and the radio frequency output means, and applying the DPD means to the at least one solid state tunable filter means to provide improved linearity to the at least one solid state tunable filter means.

14. Radio frequency transmitter or transceiver apparatus including the linearisation system according to claim 1.

15. A method of using radio frequency transmitter or transceiver apparatus including a linearisation system according to the method of claim 13.
